Europäisches Patentamt

European Patent Office

Office européen des brevets

(11) Publication number: **0 347 208**
**A2**

## (12) EUROPEAN PATENT APPLICATION

(21) Application number: **89306034.3**

(22) Date of filing: **14.06.89**

(51) Int. Cl.⁴: **F 16 D 49/08**

(30) Priority: **16.06.88 GB 8814360**

(43) Date of publication of application:
**20.12.89 Bulletin 89/51**

(84) Designated Contracting States:
**AT BE CH DE ES FR GB GR IT LI LU NL SE**

(71) Applicant: **BUTTERLEY ENGINEERING LIMITED**
**Ripley**
**Derby DE5 3BQ (GB)**

(72) Inventor: **Reed, Brian**
**23 The Hollins Holloway**
**Matlock Derbyshire DE4 5BA (GB)**

(74) Representative: **Goodanew, Martin Eric**
**MATHISEN, MACARA & CO. The Coach House 6-8**
**Swakeleys Road**
**Ickenham Uxbridge UB10 8BZ (GB)**

(54) Band brake assembly.

(57) A band brake assembly comprises a barrel (10), a band (12) wrapping around the periphery of the barrel and carrying a friction material (14). Means (28) serve to anchor one end of the band with a limited force of which the value can be preset and second means (26) anchor the band at the other end to which an actuator (44) is connected for applying braking pressure to the band.

EP 0 347 208 A2

## Description

## BAND BRAKE ASSEMBLY

This invention relates to band brake assemblies, for example for use with cranes or hoists.

The use of band brakes to control rotary drums which may for example form part of the operating equipment of a machine where the load to be controlled is unidirectional is very common practice. The conventional arrangement in which the brake actuating force is applied at the end of the band towards which the drum surface rotates while the other end of the band is anchored gives a wide range of brake performance for a given actuating load because the torque applied to the drum by the brake is very sensitive to the coefficient of friction of the brake lining material and exaggerates any variation in that coefficient. When designing for a band brake it is usual that the lowest value for the coefficient of friction is used in order to guarantee that the brake will hold the design load. The designer should also consider the effect of high values of the coefficient of friction which may make the brake so fierce that it may have a damaging effect on the machine itself and on any load under the control of the machine.

With the aim of obtaining better control of the braking performance, according to the invention there is provided a band brake assembly comprising a member having a substantially cylindrical periphery, a band wrapped around the member and provided with a friction material for contacting the cylindrical periphery of the member, anchoring means secured to one end of the band, and actuating means connected to the other end of the band for applying a tensile braking force to the band causing the band to clamp the friction material against the periphery of the member, the anchoring means being arranged to apply a pre-set, limited anchoring force to said one end of the band.

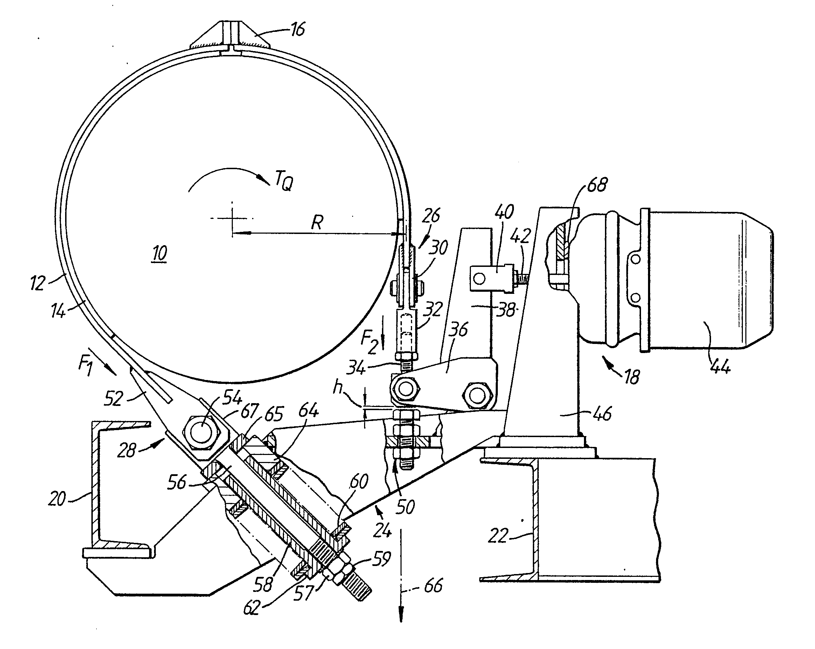

A band brake assembly embodying the invention will now be described by way of example only with reference to the accompanying diagrammatic drawing, the sole Figure of which is a side elevation of the band brake assembly

Referring now to the drawing, a band brake assembly is illustrated intended for use with a crane or hoist. The assembly comprises a member 10 having a cylindrical outline, and in the intended use the member 10 will be termed the "hoist barrel". This barrel is mounted on a shaft (not shown) forming a part of the drive system of the hoist. As the construction of the barrel is generally conventional it will not be described in further detail.

A brake band of steel 12 is partially wrapped round the hoist barrel 10 and in the particular embodiment disclosed the wrap-round is 225°. Again the band itself is generally conventional and will be made of material and dimensions appropriate to the duty required. Between the internal face of the band and the periphery of the hoist barrel, brake lining friction material 14 is secured by rivets to the band. The friction material is also secured by anchorage means 16 mounted opposite the top dead centre of the hoist barrel. The friction material is again generally conventional and may have friction coefficients varying between 0.25 as the minimum static figure, 0.37 as the minimum dynamic figure and 0.49 as the maximum dynamic figure. These figures are, however, merely illustrative and the friction material selected will depend upon the operational requirements of the brake.

The actuating means 18 for the band brake are mounted on frame members of channel section 20,22 and these are interconnected by a transverse member 24 which carries the anchorages 26,28 for the brake band ends.

The live anchorage includes a clevis 30 of conventional construction which is itself connected to a height adjuster 32 in which a screwed member 34 is lockably secured and the lower end portion of this member 34 (not shown) is itself connected to a bifurcated lever 36 forming one arm of a bell crank arrangement the upstanding arm 38 of the bell crank carrying a further clevis 40 forming an end portion of a screwed actuator rod 42, the actuator 44 itself being mounted on an upstanding member 46 carried by the frame members 22,24. The spring brake actuator 44 is generally conventional and fluid supplies will be provided in the customary manner. An adjustable stop assembly 50 is provided to limit the movement of the band around the barrel 10 and hence the compressed load of a stack of disc springs 60 and the tensile load in the band at the live end.

The other end portion of the brake band is welded in a slot of a plate 52 which is itself carried by a dead end anchor bolt 54 which is itself mounted on an adjustable rod 56, one end portion of which is screw-threaded and which passes through a spring guide or bush 58 surrounded by the disc spring stack 60, e.g. of Belleville washers, confined at one end by a flange 62 of the spring guide or bush and at the other end by an annular member 64 surrounding the bush and welded to the transverse member 24 extending between the channel section frame members 20,22. A loose collar 65 is inserted between the member 64 and a mounting 67 for the anchor bolt 54. The mounting is welded to one end of the rod 56. The other end of the rod 56 carries a nut 57 and lock nut 59 which serve to lock the rod in any required adjusted position and thus to adjust the pre-set compression applied to the spring stack 60.

When setting up the band brake the stack of disc springs 60 is compressed to a predetermined height and the stop screw 50 is wound down to give the bell crank lever 36,38 its maximum movement. The live end height adjuster 32 is adjusted until the bell crank lever upright member 38 is approximately vertical with the actuator "fired". A predetermined weight is then applied to the rope of the hoist indicated at 66, (in the particular embodiment 2500kg is suitable) and the height adjuster 32 is then re-adjusted to bring the upright member 38 of the bell crank lever to its vertical position.

The actuator rod 42 is checked for correlation with an extension position that achieves a 9.5kN force and adjustment is made at the clevis 40 and a packer 68 to achieve this correlation if necessary. Finally, with the load on the ropes and the actuator "fired", the stop 50 which operates on the anchor rod 34 of the height adjuster is adjusted to achieve a predetermined gap h, e.g. 2mm, between its upper surface and the abutment surface of the anchor rod 34.

It will be understood that the specific figures given herein are merely by way of example, the parameters selected depending of course on the requirements for a particular installation. Additional specific calculations and figures will now be set out and these clearly demonstrate the advance provided by constructions in accordance with the present invention.

For a brake band wrap-round angle of 270° and assuming a friction material having a dynamic coefficient of friction ($\mu$) in the range 0.37 to 0.49 a conventional band brake will give a braking torque range $\pm$ 31.4% about a mean or design value, whereas a band brake in accordance with the present invention will give a torque range $\pm$ 4.4%.

For a brake band wrap-round angle of 180° the corresponding figures are $\pm$ 25% (conventional) and $\pm$ 6.7% (invention).

The principle which gives rise to the well controlled performance can be demonstrated mathematically.

Assuming a 270° wrap-round angle $\theta$, forces $F_1$ and $F_2$ acting respectively on the ends 28,26 of the band, an applied torque $T_Q$, a radius R from the axis of rotation to the lines of application of forces $F_1$ and $F_2$ then with a conventional band brake the following equations apply:

$$F_1 = F_2 . e^{\mu\theta} \quad (\text{i})$$
$$T_Q = (F_1 - F_2).R \quad (\text{ii})$$

In a conventional band brake the force developed at $F_1$ is dependent upon and is greater than the actuator applied force $F_2$. Substituting the value for $F_1$ in equation (ii) we have the value

$$T_Q = F_2(e^{\mu\theta} -1).R \quad (\text{iii})$$

from which it will be apparent that the torque value is very sensitive to changes in the value of $\mu$ .

In contrast band brakes in accordance with the present invention are far more dependant upon the value of the force $F_1$ and hence the equation (ii) can be re-written

$$T_Q = F_1(1 - e^{-\mu\theta}).R$$

It will be seen from this that the torque value is much less sensitive to changes in the value of $\mu$.

For static operation, when $\mu$ will be at a low value of the order of 0.25, band brake assemblies in accordance with the invention will perform substantially as a conventional band brake, the actuator force $F_{2A}$ in the example being set to match a barrel torque of approximately 1.1 to 1.5 full load torque. The spring stack 60 will be pre-loaded to a force $F_{CONTROL}$ which exceeds force $F_1$.

Under dynamic conditions, to match increasing values of $\mu$, $F_1$ increases until $F_1 = F_{CONTROL}$ and the band is dragged around the barrel 10 until the 2mm gap at the stop 50 is closed. The abutment at the spring end of the band is relieved so that the load at that end remains at the value $F_{CONTROL}$. As the band tends to wind further round the barrel a reaction force $P_2$ applied by the stop 50 counteracts the force $F_{2A}$ applied by the actuator 44 and thus limits the torque increase. A decrease in the value $\mu$ will then reduce the drag on the band and hence the reaction force $P_2$. When $\mu$ is sufficiently low $P_2$ will reduce to zero and the gap at the abutment 50 will be re-opened and the brake performs as in a conventional band brake.

Design calculations for the illustrated embodiment are as follows:

STATIC PERFORMANCE:-

1.1 x Full Load Torque (FLT) @ $\mu$ = 0.25 and $\theta$ = 225° = 3.927 RAD

FLT = 2500 x 9.81 x 230 = 5.64 x 10⁶ Nmm

$$\text{Therefore } F_2 = \frac{1.1 \times \text{FLT}}{(e^{\mu\theta} -1) \ 237} = 15683 \text{ N}$$

SPRING BRAKE FORCE AT STATIC FIRED EXTENSION

$$= 15683 \times \frac{100}{165} = 9.5\text{kN}$$

MIN DYNAMIC PERFORMANCE:-

$$1.5 \times \text{FLT} @ \mu = 0.37 \quad \theta = 225° = 3.927 \text{ RAD}$$

$$F_1 = \frac{1.5 \times \text{FLT}}{(1-e^{-\mu\theta}) \ 237} = 46593 \text{ N}$$

FOR SELECTED DISC SPRING -

$F_1$ GIVES COMPRESSED HEIGHT OF 6.6mm

Therefore STACK OF 20 GIVES 132mm

INITIAL COMPRESSION FOR STATIC LOAD CONDITION

= 132 + 2 = 134mm

MAX DYNAMIC PERFORMANCE:-

@ $\mu = 0.49$

$TMAX = F_1 (1 - e^{-\mu\theta}) \times 237 = 9.43 \times 10^6$ Nmm

Therefore MAX BRAKE FACTOR = $\underline{TMAX}$ = 1.672

The band brake assembly hereinbefore described has various advantages in relation to conventional band brakes. For example, when employed as an emergency brake operative on the rope drum of an overhead crane there are the following specific advantages:

a) rates of load deceleration can be more accurately predicted

b) the maximum potential forces developed by the brake are only slightly greater than its minimum requirement enabling supporting structure to be designed for less severe load conditions than with conventional band brakes

c) the system intrinsically controls its own overloads and is completely mechanical therefore it does not need any expensive actuator controlling servo-system.

d) the assembly consists of simple and reliable components and can be used in 'fail safe' systems

e) the brake can be designed for maximum torque requirement without sacrificing its minimum torque perforance

f) the brake actuator force and the disc spring stack force can be set so that the brake would always operate in its 'dynamic' braking mode i.e. with the 'stop' effective under static loading.

**Claims**

1. A band brake assembly comprising a member (10) having a substantially cylindrical periphery, a band (12) wrapped around the member and provided with a friction material (14) for contacting the cylindrical periphery of the member, anchoring means (28) secured to one end of the band, and actuating means (18) connected to the other end (26) of the band for applying a tensile braking force to the band causing the band to clamp the friction material against the periphery of the member, characterised in that the anchoring means (28) is arranged to apply a pre-set, limited anchoring force to said one end of the band (12).

2. A band brake assembly according to claim 1, in which the anchoring means (28) comprises spring means (60) for applying the pre-set limited anchoring force to the band.

3. A band brake assembly according to claim 2, in which the spring means (60) comprises a stack of disc springs.

4. A band brake assembly according to any one of the preceding claims, in which the pre-set limited anchoring force is adjustable.

5. A band brake assembly according to any one of the preceding claims, in which a stop (50) is provided for limiting movement of said other end (26) of the band (12) when, under dynamic operating conditions, the braking force applied to the band exceeds the anchoring force.

6. A band brake assembly according to claim 5, in which the position of the stop (50) is adjustable.

7. A band brake assembly according to any one of the preceding claims, in which the connection (26) of the band (12) to the actuating means (18) includes means (32,34) for adjusting the length of the band.

8. A band brake assembly according to any one of the preceding claims, in which the actuating means (18) comprises a fluid pressure operated actuator (44) and a bell crank lever (36,38) having one arm (38) connected to the band (12) and the other arm (38) acted upon by the actuator (44).

EP 0 347 208 A2